# EUROPEAN PATENT SPECIFICATION

(11) **EP 2 368 789 B1**
(45) Date of publication and mention of the grant of the patent: **17.07.2013**
(21) Application number: 11157767.2
(22) Date of filing: 10.03.2011
(51) Int. Cl.: B62J 37/00, B62K 11/10

(54) **Motor scooter type vehicle**
Motorrollerartiges Fahrzeug
Véhicule de type scooter à moteur

(30) Priority: 15.03.2010 JP 2010058179
(43) Date of publication of application: 28.09.2011
(73) Proprietor: Honda Motor Co., Ltd., Tokyo 107-8556 (JP)
(72) Inventor: Yamada, Hiroshi, Saitama 351-0193 (JP)
(74) Representative: Ilgart, Jean-Christophe

(56) References cited:
- JP-A- 4 362 484
- US-A- 5 433 286

## Description

### [Technical Field]

The present invention relates to an improvement in a motor scooter type vehicle, particularly to an improvement of the layout of a fuel filter provided in a motor scooter type vehicle.

### [Background Art]

As a conventional motor scooter type vehicle, there has been known one in which a fuel filter is provided at an intermediate part of a fuel supply line for supplying a fuel in a fuel tank to a combustion chamber of an engine (see, for example, Patent Document 1 (FIGS. 1 and 2)).

As shown in FIG. 1 of Patent Document 1, a motor scooter type vehicle (10) (parenthesized symbols are those used in Patent Document 1, here and hereafter) is provided with a unit swing type engine (22) swingably mounted to a rear frame (135b), and a fuel tank (25) disposed under a step floor (24) on which the rider's feet are put on the front side of the engine (22).
As shown in FIG. 2 of Patent Document 1, the fuel in the fuel tank (25) is supplied through a conduit (321) to the fuel filter (34), where it is clarified, before being supplied to the engine through a fuel pump (26).

However, when the fuel filter (34) is disposed in the space on the lower side of the cylinder head (308) and the head cover (311) on the rear side of the fuel tank (25) in the vehicle front-rear direction as shown in FIG. 1 of Patent Document 1, swinging of the unit swing type engine (22) results in that the cylinder head (308) and the head cover (311) are also swung up and down, so that the cylinder head (308) and the head cover (311) come to be proximate to the fuel filter (34).

In order to secure a clearance between the fuel filter (34) and the cylinder head (308) as well as the head cover (311) when they come proximate to each other, a method of reducing the size of the fuel filter (34) may be contemplated. If the fuel filter (34) is reduced in size, however, the cycle time of element replacement for the fuel filter may be shortened. Thus, there is a need for a motor scooter type vehicle in which the capacity of a fuel filter can be set freely, without any restriction imposed by swinging of a unit swing type engine.

### [Prior Art Document]

[Patent Document 1]
   Japanese Patent Laid-open No. 2002-206466

### [Summary of the Invention]

Documents JP 4 362 484 and US 5 433 286 also disclose a relevant prior art. Document JP 4 362 484 discloses a motor scooter vehicle according to the preamble of claim 1.

### [Problem to be Solved by the Invention]

It is an object of the present invention to provide a motor scooter type vehicle in which the capacity of a fuel filter can be set freely, without any restriction imposed by swinging of a unit swing type engine.

### [Means for Solving the Problem]

The invention according to claim 1 provides a motor scooter type vehicle including a body frame having a main frame extended from a head pipe toward a vehicle rear lower side and a rear frame extended from a rear portion of the main frame toward a rear upper side of the vehicle, a unit swing type engine supported on the body frame in a vertically swingably manner, a fuel tank supported on the body frame on a front side of the unit swing type engine, a fuel supply line through which a fuel in the fuel tank is adapted to be supplied to the unit swing type engine, and a fuel filter disposed at an intermediate part of the fuel supply line, wherein a cylinder unit is projectingly provided at a crankcase of the unit swing type engine characterized in that the fuel filter is disposed in a space surrounded by the main frame and the rear frame in side view of the vehicle, at a position on a lateral side of the cylinder unit.

The invention according to claim 2 is characterized in that the fuel supply line is provided with a fuel supply device through which the fuel in the fuel tank is adapted to be supplied to the unit swing type engine; and the fuel tank, the fuel filter and the fuel supply device are disposed in this order from a front side of the vehicle toward a vehicle rear side along a vehicle front-rear direction.

The invention according to claim 3 is characterized in that a storage box is provided between the fuel tank and the unit swing type engine, and the fuel filter is disposed on a lateral side in a vehicle width direction of the storage box.

The invention according to claim 4 is characterized in that the fuel filter is disposed on an inner side relative to an outside end in the vehicle width direction of the rear frame, and is mounted to the rear frame with its longitudinal direction set along an inclination of the rear frame.

The invention according to claim 5 is characterized in that an exhaust pipe is extended from the cylinder unit toward the vehicle rear side, the fuel filter is disposed above the exhaust pipe, and the exhaust pipe and the fuel filter are disposed distributedly to left and right sides of the vehicle, with a vehicle body center line therebetween.

The invention according to claim 6 is characterized in that the fuel supply line is provided with a fuel pump through which the fuel in the fuel tank is adapted to be supplied under pressure to the fuel supply device, and with a pressure regulator for returning a portion of the fuel to the fuel tank when the fuel pressure between the fuel pump and the fuel supply device is increased to reach a predetermined pressure; and the pressure regulator is disposed between the fuel filter and the fuel supply device and is disposed at a position above the fuel filter.

The invention according to claim 7 is characterized in that the fuel supply line is provided with a pre-pump filter on an upstream side of the fuel pump, and the fuel filter is set to be finer in pore size than the pre-pump filter.

The invention according to claim 8 is characterized in that a lateral side in the vehicle width direction of the fuel filter is covered with a body cover, and the body cover is provided with a maintenance lid via which inspection of the fuel filter is performed.

The invention according to claim 9 is characterized in that the fuel supply line in the range from the fuel tank to the fuel supply device is substantially U-shaped in plan view.

### [Effect of the Invention]

In the invention according to claim 1, the fuel filter is disposed in the space surrounded by the main frame and the rear frame in side view of the vehicle, at a position on a lateral side of the cylinder unit projectingly provided at the crankcase of the unit swing type engine. If the fuel filter is disposed on the upper side or the lower side of the cylinder unit, since the cylinder unit is also swung in the vertical direction as the engine is swung in the vertical direction, the capacity of the fuel filter is restricted in order to secure a clearance between the cylinder unit and the fuel filter.
In this point, according to the present invention, the fuel filter is disposed in the space on a lateral side of the cylinder unit, and, therefore, the capacity of the fuel filter can be set freely, without any restriction imposed by the swinging in the vertical direction of the cylinder unit.

In addition, since the fuel filter is disposed in the space surrounded by the main frame and the rear frame in side view of the vehicle, the fuel filter can be protected by the main frame and the rear frame.

In the invention according to claim 2, the fuel tank, the fuel filter and the fuel supply device are disposed in this order from the front side along the vehicle front-rear direction. If the fuel filter is disposed on the vehicle front side of the fuel tank and the fuel supply device is disposed on the vehicle rear side of the fuel tank, the fuel supply line from the fuel tank to the fuel supply device would be long because the fuel supply line extends by way of the fuel filter located on the front side of the fuel tank.
In this point, according to the present invention, the fuel filter is disposed on the rear side of the fuel tank, and, therefore, the fuel supply line ranging from the fuel tank to the fuel supply device can be made short.

In the invention according to claim 3, the fuel filter is disposed on a lateral side in the vehicle width direction of the storage box, and, therefore, the capacity of the storage box in the vertical direction can be set large.
In addition, the fuel filter also is free of restriction imposed by the storage box enlarged in capacity in the vertical direction, so that the capacity of the fuel filter can be set freely.

Besides, while the storage box is disposed between the fuel tank and the engine, the fuel filter is disposed on a lateral side in the vehicle width direction of the storage box; therefore, the fuel tank, the fuel filter and the fuel supply device can be disposed in this order from the front side without enlarging the length in the front-rear direction of the vehicle, so that the fuel supply line ranging from the fuel tank to the fuel supply device can be made short.

In the invention according to claim 4, the fuel filter is disposed on the inner side relative to an outside end in the vehicle width direction of the rear frame, and, therefore, the fuel filter can be protected by the rear frame.
Further, since the longitudinal direction of the fuel filter is set along the inclination of the rear frame, the amount of projection of the fuel filter from the rear frame can be minimized.

In the invention according to claim 5, the fuel filter is located above the exhaust pipe, and is disposed on the opposite side of the vehicle body center line from the exhaust pipe. With the fuel filter disposed on one side of the vehicle body center line and with the exhaust pipe disposed on the other side of the vehicle body center line, the fuel filter can be sufficiently spaced from the exhaust pipe. Consequently, it can be ensured that the fuel filter is less liable to receive heat from the exhaust pipe.

In the invention according to claim 6, the pressure regulator is disposed at a position above the fuel filter, whereby it is ensured that the fuel supply line in the range from the fuel filter to the pressure regulator extends upward from the fuel filter. Consequently, leakage of the fuel from the fuel supply device due to the weight of the fuel collected in the fuel filter can be restrained, even in the case where the vehicle is parked for a long period of time.

In the invention according to claim 7, the fuel filter is set to be finer in pore size than the pre-pump filter. Since the pore size of the fuel filter and the pore size of the pre-pump filter are set different from each other, it is possible, even in the case of using a fuel in which fine dust is contained such as ethanol, to trap coarser dust by the pre-pump filter and to trap by the fuel filter the finer dust having failed to be trapped by the pre-pump filter. Accordingly, such a fuel as ethanol can be used.
In addition, since the coarser dust is trapped by the pre-pump filter and therefore coarser dust is not trapped by the fuel filter, the possibility of clogging of the fuel filter can be lowered, and the replacement frequency for the fuel filter can be reduced. Further, since the pre-pump filter is coarse in pore size, possibility of clogging of the pre-pump filter can be made low. Therefore, the pre-pump filter is restrained from constituting a resistance against the operation of the fuel pump, and, therefore, it is possible to adopt an inexpensive fuel pump.

Accordingly, the replacement cycle times for the pre-pump filter and the fuel filter can both be made long, the frequency of maintenance can be lowered, and the flow rate of the fuel passing through the pre-pump filter and the fuel filter can be kept favorable.

In the invention according to claim 8, the body cover is provided with the maintenance lid via which inspection of the fuel filter is performed. Since the fuel filter is set to be finer in pore size than the pre-pump filter so that a fuel in which fine dust is contained such as ethanol can be used, the replacement cycle time for the fuel filter is shorter than that for the pre-pump filter. However, mounting and dismounting of the fuel filter can be performed by only opening the maintenance lid, and, therefore, the replacement work is easy to carry out.

In the invention according to claim 9, the fuel supply line in the range from the fuel tank to the fuel supply device is substantially U-shaped in plan view. Thus, the length of the fuel supply line is secured to a certain extent. Therefore, in the case where, for example, a mixed fuel of ethanol and gasoline is used and the mixing ratio is changed due to supply of the fuel, fuel injection optimal for starting can be performed and the engine can be started favorably, since the fuel before the change in the ethanol-gasoline mixing ratio is filling the fuel supply line ranging from the fuel tank to the fuel supply device.

### [Brief Description of the Drawings]

FIG. 1 is a side view of a motor scooter type vehicle according to the present invention.
FIG. 2 is a plan view of the motor scooter type vehicle according to the present invention.
FIG. 3 is a plan view of an essential part of the motor scooter type vehicle.
FIG. 4 is a sectional view taken along line 4-4 of FIG. 3.
FIG. 5a and 5b illustrate mounting of a fuel filter and a filter support clip.
FIG. 6 is a view taken along arrow 6 of FIG. 4.
FIG. 7 is a sectional view taken along line 7-7 of FIG. 6.
FIG. 8 is a sectional view of the fuel filter.
FIG. 9 is a sectional view of a pressure regulator.
FIG. 10 is a system diagram of a fuel supply line.

### [Mode for Carrying Out the Invention]

An embodiment of the present invention will be described below based on the accompanying drawings. Incidentally, the drawings are to be viewed according to the orientation of the reference symbols, and arrows (FRONT) in the drawings indicate the vehicle front side.

### [Example 1]

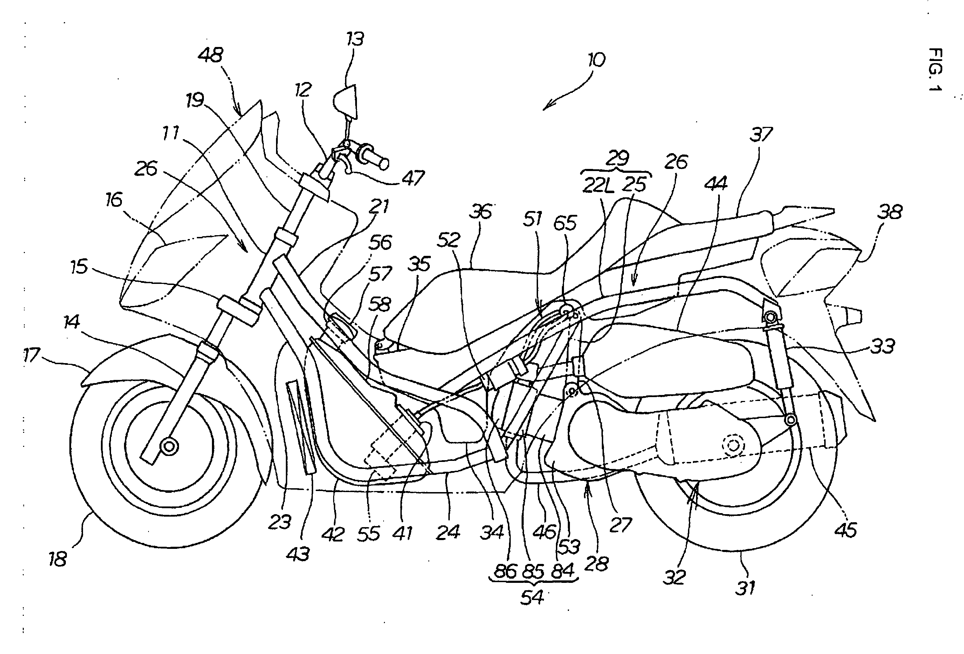

First, Example 1 of the present invention will be described based on the drawings.
As shown in FIG. 1, a motor scooter type vehicle 10 includes a handle 12 steerably mounted to a head pipe 11, side mirrors 13 which are raised from the handle 12 and by which the driver checks the rear side, a stem pipe 19 mounted to the lower end of the handle 12, a bottom bridge 15 which is mounted to the lower end of the stem pipe 19 and which supports the upper ends of a pair of left and right front forks 14, a headlamp 16 which is disposed on the front side of the head pipe 11 and which is turned on while facing the vehicle front side, and a front wheel 18 which is supported on the front forks 14 and the upper side of which is covered with a front fender 17.

In addition, a main frame 21 is extended from the head pipe 11 toward a rear lower side, and a seat rail 22L is extended from an intermediate portion of the main frame 21 toward a rear upper side of the vehicle. A down tube 23 is extended toward a rear lower side from the head pipe 11, on the lower side of the main frame 21. A lower pipe 24 is extended from the lower end of the down tube 23 toward the vehicle rear side, and a sub frame 25 is extended from the rear end of the main frame 21 toward the seat rail 22L and a rear upper side of the vehicle.
It can be said that the seat rail 22L and the sub frame 25 constitute a rear frame 29, and the rear frame 29 extends from a rear portion of the main frame 21 toward a rear upper side of the vehicle.
The head pipe 11, the main frame 21, the down tube 23, the lower pipe 24, the seat rail 22L and the sub frame 25 constitute a body frame 26.

Besides, a unit swing type engine 28 is supported on the body frame 26 (the rear frame 29, specifically, the seat rail 22L) through a link 27 in a vertically swingable manner, and the unit swing type engine 28 is provided with a power transmission mechanism 32 for transmitting the power of the unit swing type engine 28 to a rear wheel 31. A rear cushion 33 is extended from the rear end of the seat rails 22L toward the rear end of the power transmission mechanism 32.

A storage box 35 having a bulged part 34 bulged to the lower side is supported on the main frames 21 and the seat rail 22L; a front seat 36 on which the driver is seated is disposed on the upper side of the storage box 35; a rear seat 37 on which a pillion passenger is seated is disposed on the rear side of the front seat 36; a tail lamp 38 turned on when a brake is applied is disposed on the rear side of the rear seat 37; and a fuel tank 42 having a fuel pump 41 for feeding a fuel under pressure is supported on the down tube 23 and the lower pipe 24.
The storage box 35 is provided between the fuel tank 42 and the unit swing type engine 28.

In addition, a radiator 43 by which cooling water warmed by the engine 28 is cooled is disposed on the front side of the fuel tank 42, an air cleaner 44 for supplying air to the engine 28 is disposed on the upper side of the engine 28, an exhaust pipe 46 for feeding out an exhaust gas is extended from the lower side of the engine 28 toward a muffler 45 disposed on the right side of the vehicle, a brake lever 47 for operating to brake the rear wheel 31 is mounted to the handle 12, and the vehicle body is covered with a body cover 48 indicated by imaginary lines.

A fuel supply line 51 for feeding the fuel in the fuel tank 42 to the unit swing type engine 28 is provided near the center of the vehicle, and a fuel filter 52 is provided at an intermediate portion of the fuel supply line 51. The fuel filter 52 is located on a lateral side of a cylinder unit 54 projectingly provided at a crankcase 53 of the unit swing type engine 28, and is disposed in a space surrounded by the main frame 21 and the rear frame 29 (the seat rail 22L and the sub frame 25).

The cylinder unit 54 is composed of a cylinder block 84 projected forward from a front portion of the crankcase 53, a cylinder head 85 provided at the front end of the cylinder block 84, and a head cover 86 provided at the front end of the cylinder head 85.
The exhaust pipe 46 is extended from a lower portion of the cylinder head 85 toward the vehicle rear side, and the fuel filter 52 is disposed above the exhaust pipe 46.
In addition, the fuel supply line 51 is provided with a pre-pump filter 55 on the upstream side of the fuel pump 41, and the fuel filter 52 is set to be finer in pore size than the pre-pump filter 55.
The fuel tank 41 has a fuel supply port 56 disposed on the front side of the front seat 36, and the fuel supply port 56 is closed with a fuel cap 57. The fuel tank 41 is inclined rearwardly downward from the position of the fuel supply port 56, and the fuel pump 41 is provided at a lower portion of the inclined part 58.

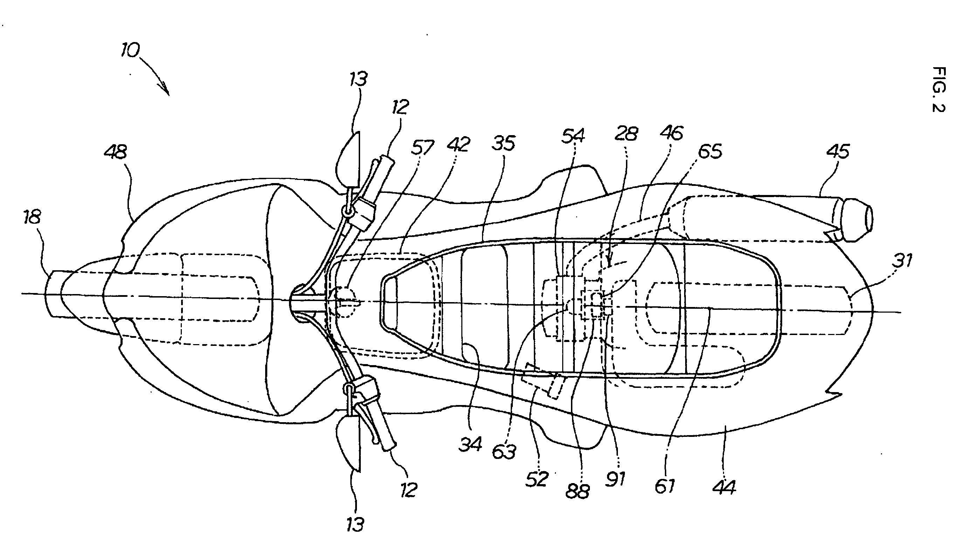

As shown in FIG. 2, the exhaust pipe 46 and the fuel filter 52 are laid out distributedly to the left and right sides of the vehicle, with the vehicle body center line 61 therebetween.
The fuel filter 52 is disposed on a lateral side in the vehicle width direction of the storage box 35.
In addition, as shown in FIG. 1, a bulged part 34 of the storage box 35 is located between the fuel tank 42 and the cylinder unit 54 of the engine 28, so that the capacity of the storage box 35 can be set large.

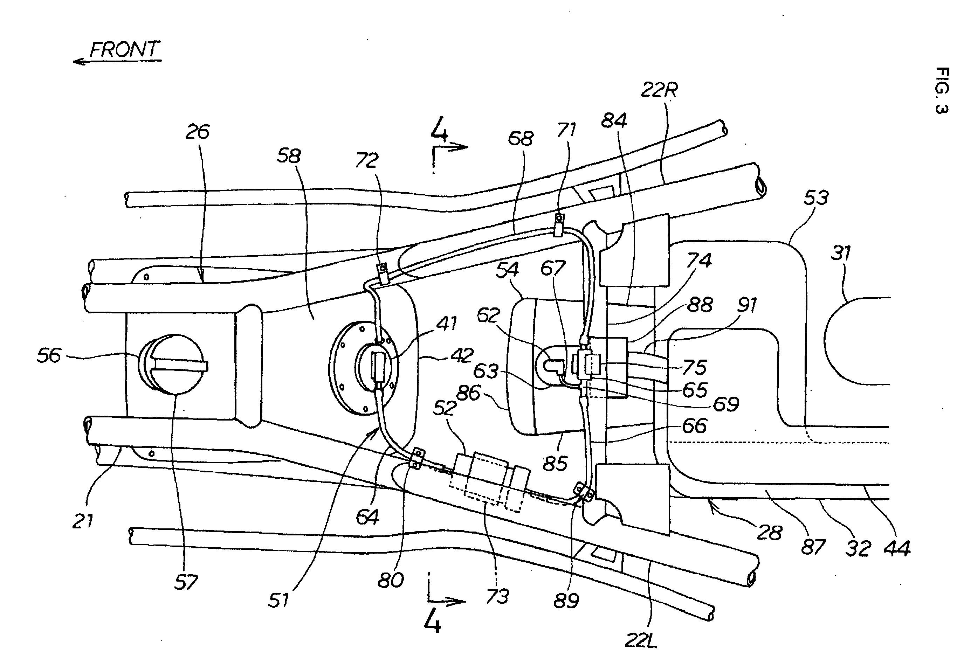

Now, layout of the fuel filter 52 in plan view will be described below.
As shown in FIG. 3, the fuel supply line 51 for supplying the engine 28 with the fuel is connected to the fuel tank 42. The fuel supply line 51 is provided with the pre-pump filter (FIG. 1, symbol 55) for clarifying the fuel in the fuel tank 42, the fuel pump 41 disposed on the downstream side of the pre-pump filter 55, the fuel filter 52 disposed on the downstream side of the fuel pump 41 and set to be finer in pore size than the pre-pump filter 55, and an injector 62 as a fuel supply device for supplying the fuel to the engine 28, which are laid out in this order from the front side of the vehicle.

In addition, these components are laid out in the order of fuel tank 42, the fuel filter 52, and the injector 62 from the front side, along the front-rear direction of the vehicle.
Incidentally, the pre-pump filter 55 and the fuel pump 41 are provided in the fuel tank 42, and the injector 62 is mounted to an intake pipe 63.

Besides, the fuel supply line 51 is composed of a first fuel pipe 64 extended from the fuel pump 41 and connected to the fuel filter 52, a second fuel pipe 66 extended from the fuel filter 52 and connected to the upstream side of a pressure regulator 65, and a third fuel pipe 67 which is extended from a branching part disposed on the upstream side of the pressure regulator 65 and which is connected to the injector 62. By this configuration, the fuel in the fuel tank 42 is supplied from the injector 62 to the engine 28 side.
Besides, the fuel supply line 51 in the range from the fuel tank 42 to the injector 62 is substantially U-shaped in plan view.

Incidentally, the pressure regulator 65 returns a portion of the fuel to the fuel tank 42 through a return pipe 68 connecting the pressure regulator 65 and the fuel tank 42 to each other when the fuel pressure in the fuel supply line 51 between the fuel pump 41 and the injector 62 is increased to reach a predetermined pressure.
The return pipe 68 is held by pipe clips 71 and 72 provided on the seat rail 22R.
In addition, the first fuel pipe 64 is held by a pipe clip 80 provided on the seat rail 22L, and the second fuel pipe 66 is held by a pipe clip 89 provided on a cross pipe 74.

The fuel filter 52 is held by a filter support clip 73 (detailed later) provided on the seat rail 22L, and the pressure regulator 65 is held by a pressure regulator support clip 75 provided on the cross pipe 74 bridgingly disposed between the seat rails 22L and 22R.
Besides, the fuel filter 52 is disposed on the inner side relative to an outside end in the vehicle width direction of the seat rail 22L.

An intake system 87 is composed of the intake pipe 63 connected to an upper portion of the cylinder head 85, a throttle body 88 connected to the intake pipe 63, and an air cleaner 44 connected to the throttle body 88 through a connecting tube 91.
The injector 62 is mounted to the intake pipe 63, and the fuel is supplied to the engine 28 side by the injector 62.

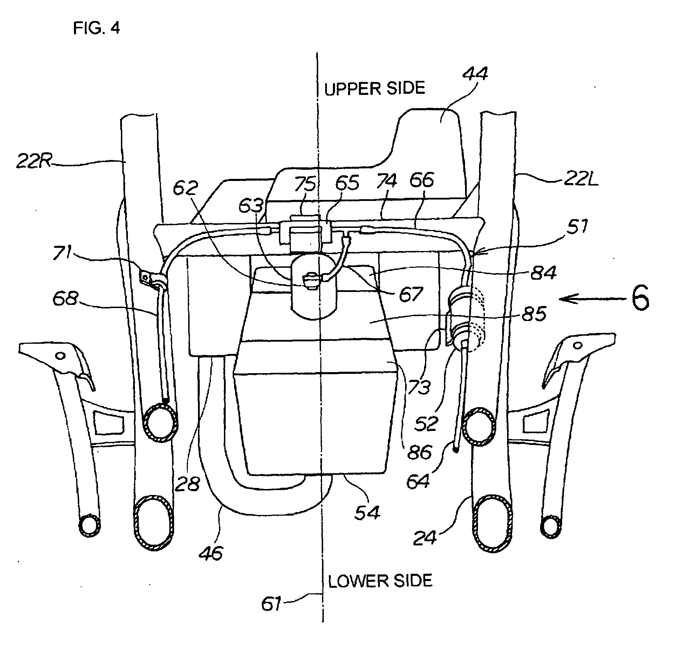

As shown in FIG. 4, the pressure regulator 65 is disposed between the fuel filter 52 and the injector 62, and is disposed at a position above the fuel filter 52. Incidentally, it can be said that the pressure regulator 65 is disposed between the second fuel pipe 66 and the third fuel pipe 67.
In addition, since the cylinder unit 54 and the fuel filter 52 are spaced from each other in the vehicle width direction, the cylinder unit 54 would not interfere with the fuel filter 52 even when the cylinder unit 54 is swung in the vertical direction.

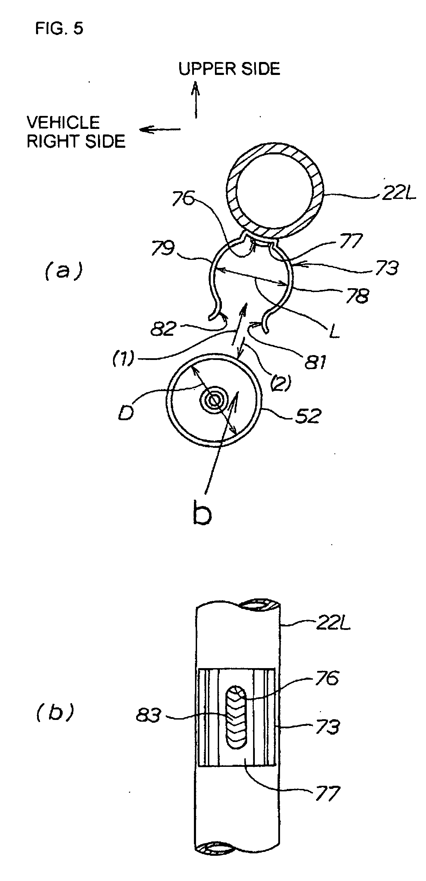

Now, mounting of the fuel filter 52, the filter support clip 73 and the like will be described below.
As shown in FIG. 5 (a), the filter support clip 73 mounted to the seat rail 22L is substantially C-shaped, and is formed of an elastically deformable material. The filter support clip 73 is composed of a bottom part 77 in which a slot 76 is bored, arm parts 78 and 79 extending from both ends of the bottom part 77, and turn-back parts 81 and 82 provided at the tips of the arm parts 78 and 79.

The fuel filter 52 has a cylindrical shape with a diameter D. At the time of mounting the fuel filter 52, it is moved along arrow (1), to be pressed into the filter support clip 73. By this, the turn-back parts 81 and 82 are pushed open wider, and, when the fuel filter 52 is moved to the depth of the filter support clip 73, the fuel filter 52 is clamped between the arm parts 78 and 79.
At the time of dismounting the fuel filter 52, it is moved along arrow (2), to be drawn out of the filter support clip 73. By this, the turn-back parts 81 and 82 are pushed open wider, and, when the fuel filter 52 is moved from the depth of the filter support clip 73, it is detached from the arm parts 78 and 79.
The distance L between the arm parts 78 and 79 is smaller than the diameter D, and, therefore, the fuel filter 52 is held by an elastic action of the filter support clip.

In addition, the filter support clip 73 is provided on the seat rail 22L, and is open toward a lower inner side of the vehicle.
Incidentally, the regulator support clip (FIG. 3, symbol 75) is also substantially C-shaped and is formed of an elastically deformable material.
The regulator support clip (FIG. 3, symbol 75) is provided on the cross pipe (FIG. 3, symbol 74), and is open toward an upper front side.

FIG. 5(b) is a view taken along arrow b of FIG. 5(a), showing that the filter support clip 73 is provided with the slot 76 in the bottom surface thereof, and is fixed to the seat rail 22L by welding this part. Symbol 83 denotes a weld part. Incidentally, the regulator support clip 75 is also welded to the cross pipe 74 in a similar manner.

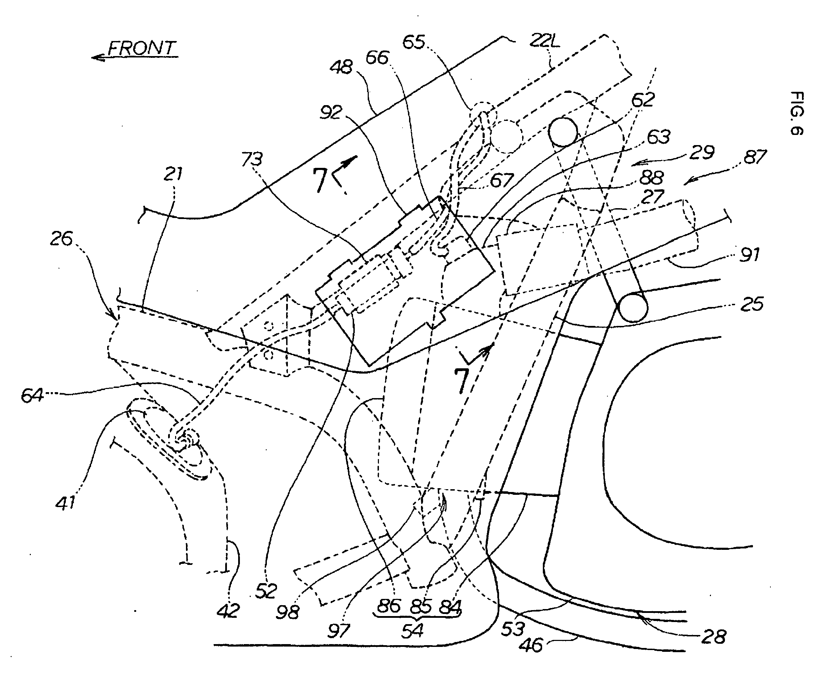

As shown in FIG. 6, the engine 28 is composed of the crankcase 53 for containing a crankshaft (not shown) therein, and the cylinder unit 54 projecting from the crankcase 53 toward the vehicle front side. In addition, the cylinder unit 54 is composed of a cylinder block 84 and a cylinder head 85 and a head cover 86 in this order from the crankcase 53 side.

Besides, the fuel filter 52 is mounted to the seat rail 22L, with its longitudinal direction set along the inclination of the seat rail 22L. Incidentally, the fuel filter 52 may be mounted to be along the inclination of the sub frame 25.
The body cover 48 is provided with a maintenance lid 92 via which inspection of the fuel filter 52 is performed.
An O₂ sensor is provided at the cylinder head 85 in the state of projecting into an exhaust port 97 of the cylinder head 85.

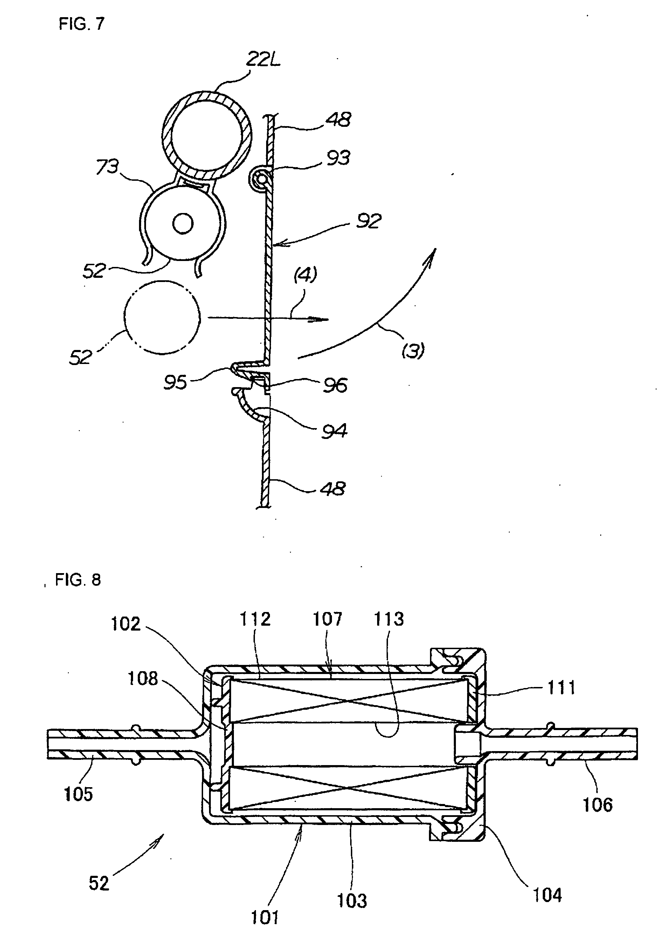

Now, the maintenance lid 92 will be described below.
As shown in FIG. 7, the maintenance lid 92 is provided on an outer side in the vehicle width direction of the fuel filter 52.

A hinge 93 is provided at an upper end portion of the maintenance lid 92. With a finger put into a recess 94, the maintenance lid 92 is opened and closed as indicated by arrow (3). A claw 96 is provided at a stepped part 95, and, with the claw 96 caught on the body cover 48, the maintenance lid 92 is kept in a closed state.
Besides, with the maintenance lid 92 in an opened state, the fuel filter 52 indicated by imaginary line is taken out as indicated by arrow (4). Incidentally, it suffices for the maintenance lid 92 to be so sized that mounting and dismounting of only the fuel filter 52 can be performed via the maintenance lid 92.

Now, the fuel filter 52 will be described below.
As shown in FIG. 8, the fuel filter 52 is composed of a filter case 101, and a filter assembly 102 contained in the filter case 101.
The filter case 101 is composed of a case body 103 having a bottomed tubular shape, and a case cover 104 for closing an opening part of the case body 103.

The case body 103 is provided with a fuel suction port 105 which is connected to the fuel pipe (FIG. 3, symbol 64) on the fuel tank (FIG. 3, symbol 42) side and through which the fuel is sucked in. The case cover 104 is provided with a fuel discharge port 106 which is connected to the fuel pipe (FIG. 3, symbol 66) on the injector (FIG. 3, symbol 62) side and through which the fuel is discharged.

The filter assembly 102 is composed of a cylindrical filter 107 made of filter paper, and a frame bodies 108 and 111 for supporting both ends of the filter 107. The filter assembly 102 is fixed in the state of being clamped between the case body 103 and the case cover 104.

The fuel is sucked through the fuel suction port 105 into the filter case 101, then flows through the filter 107 from its outer peripheral surface 112 to its inner peripheral surface 113, when the fuel is filtered, and the filtered fuel is discharged through the fuel discharge port 106 to the exterior of the filter case 101.

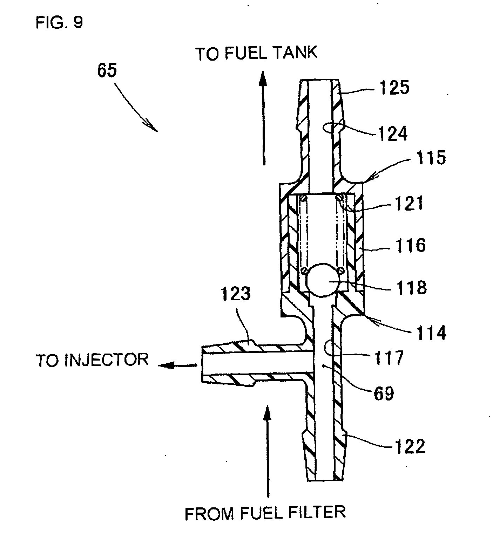

Now, the pressure regulator 65 will be described below.
As shown in FIG. 9, the pressure regulator 65 is composed of a case 116 having a resin-made first case 114 and a resin-made second case 115 joined to each other, a copper-made spherical valve element 118 for opening and closing a passage hole 117 bored in the bottom on one end side of the case 116, a helical compression spring 121 for biasing the valve element 118 so as to close the passage hole 117, a fuel suction port 122 in which the passage hole 117 is bored, a fuel discharge port 123 formed at an intermediate part of the fuel suction port 122, and a fuel return port 125 provided with a passage hole 124 bored in the bottom on the other end side of the case 116.

The fuel suction port 122 is connected to the fuel filter (FIG. 3, symbol 52) through the second fuel pipe (FIG. 3, symbol 66), whereas the fuel discharge port 123 is connected to the injector (FIG. 3, symbol 62) through the third fuel pipe (FIG. 3, symbol 67), and the fuel return port 125 is connected to the fuel tank (FIG. 3, symbol 42) through the return pipe (FIG. 3, symbol 68).

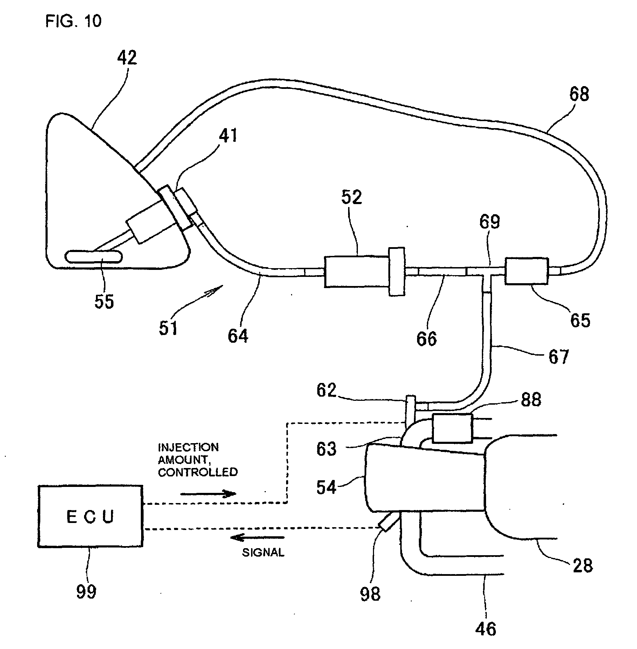

Now, a system diagram will be described below.
As shown in FIG. 10, the fuel in the fuel tank 42 is supplied under pressure by the fuel pump 41 through the pre-pump filter 55, the first fuel pipe 64, the fuel filter 52, the second fuel pipe 66, a branching part 69 of the pressure regulator 65, and the third fuel pipe 67, to be supplied from the injector 62 to the engine 28 side.
Incidentally, the pressure regulator 65 returns a portion of the fuel to the fuel tank 42 through the return pipe 68 connecting the pressure regulator 65 and the fuel tank 42 to each other when the fuel pressure in the fuel supply line 51 between the fuel pump 41 and the injector 62 is increased to reach a predetermined pressure.

The fuel supply line 51 in the range from the fuel tank 42 to the fuel supply device 62 is substantially U-shaped in plan view (see FIG. 3).
The length of the fuel supply line 51 is secured to a certain extent. This ensures that, even in the case where, for example, a mixed fuel of ethanol and gasoline is used and the mixing ratio is changed due to fuel supply, fuel injection optimal for starting can be performed and the engine 28 can be started favorably, since the fuel before the change in the ethanol-gasoline mixing ratio is filling the fuel supply line 51 in the range from the fuel tank 42 to the fuel supply device 62 and this mixing ratio has already been learned by an ECU 99 mounted on the vehicle. In addition, after the starting of the engine 28, the change in the mixing ratio is re-learned by the ECU 99 on the basis of a signal from an O₂ sensor 98 or the like, and the fuel injection amount at the injector 62 is controlled, so as to perform fuel injection optimal for the ethanol-gasoline mixing ratio after the starting of the engine 28.

Now, the above descriptions will be summarized as follows.
As shown in FIGS. 1 to 4 and 6 above, the motor scooter type vehicle 10 includes the body frame 26 having the main frame 21 extended from the head pipe 11 toward the vehicle rear side and the rear frame 29 extended from a rear portion of the main frame 21 toward a rear upper side of the vehicle, the unit swing type engine 28 supported on the body frame 26 in a vertically swingable manner, the fuel tank 42 supported on the body frame 26 on the front side of the unit swing type engine 28, the fuel supply line 51 through which the fuel in the fuel tank 42 is supplied to the unit swing type engine 28, and the fuel filter 52 disposed at an intermediate part of the fuel supply line 51, and, in this motor scooter type vehicle 10, the fuel filter 52 is disposed in the space surrounded by the main frame 21 and the rear frame 29 in side view of the vehicle, at a position on a lateral side of the cylinder unit 54 projectingly provided at the crankcase 53 of the unit swing type engine 28.

This configuration ensures that, since the fuel filter 52 is disposed in the space on a lateral side of the cylinder unit 54, the capacity of the fuel filter 52 can be set freely, without any restriction imposed by the swinging in the vertical direction of the cylinder unit 54.
In addition, since the fuel filter 52 is disposed in the space surrounded by the main frame 21 and the rear frame 29 in side view of the vehicle, the fuel filter 52 can be protected by the main frame 21 and the rear frame 29.

As shown in FIGS. 2, 3 and 6 above, the fuel supply line 51 is provided with the fuel supply device 62 by which the fuel in the fuel tank 42 is supplied to the unit swing type engine 28; and the fuel tank 42, the fuel filter 52 and the fuel supply device 51 are disposed in this order from the front side along the vehicle front-rear direction.
This configuration ensures that, since the fuel filter 52 is disposed on the rear side of the fuel tank 42, the fuel supply line 51 ranging from the fuel tank 42 to the fuel supply device 62 can be made short.

As shown in FIGS. 1 and 2 above, the storage box 35 is provided between the fuel tank 42 and the unit swing type engine 28, and the fuel filter 52 is disposed on a lateral side in the vehicle width direction of the storage box 35.

This configuration ensures that the capacity of the storage box 35 in the vertical direction can be set large.
In addition, the fuel filter 52 also is free of restriction imposed by the storage box 35 enlarged in capacity in the vertical direction, so that the capacity of the fuel filter 52 can be set freely.

Besides, while the storage box 35 is disposed between the fuel tank 42 and the engine 28, the fuel filter 52 is disposed on a lateral side in the vehicle width direction of the storage box 35; therefore, the fuel tank 42, the fuel filter 52 and the fuel supply device 62 can be disposed in this order from the front side without enlarging the length in the front-rear direction of the vehicle, so that the fuel supply line 51 ranging from the fuel tank 42 to the fuel supply device 62 can be made short.

As shown in FIGS. 3, 4 and 6 above, the fuel filter 52 is disposed on the inner side relative to an outside end in the vehicle width direction of the rear frame 29, and is mounted to the rear frame 29 with its longitudinal direction set along the inclination of the rear frame 29.
This configuration ensures that, since the fuel filter 52 is disposed on the inner side relative to an outside end in the vehicle width direction of the rear frame 29, the fuel filter 52 can be protected by the rear frame 29.
Further, since the longitudinal direction of the fuel filter 52 is set along the inclination of the rear frame 29, the amount of projection of the fuel filter 52 from the rear frame 29 can be minimized.

As shown in FIGS. 1 and 2 above, the exhaust pipe 46 is extended from the cylinder unit 54 toward the vehicle rear side, the fuel filter 52 is disposed above the exhaust pipe 46, and the exhaust pipe 46 and the fuel filter 52 are disposed distributedly to the left and right sides of the vehicle, with the vehicle body center line 61 therebetween.
This configuration ensures that, with the fuel filter 52 disposed on one side of the vehicle body center line 61 and with the exhaust pipe 46 disposed on the other side of the vehicle body center line 61, the fuel filter 52 can be sufficiently spaced from the exhaust pipe 46. Consequently, it can be ensured that the fuel filter 52 is less liable to receive heat from the exhaust pipe 46.

As shown in FIGS. 1, 4 and 6 above, the fuel supply line 51 is provided with the fuel pump 41 by which the fuel in the fuel tank 42 is supplied under pressure to the fuel supply device 62, and with the pressure regulator 65 for returning a portion of the fuel to the fuel tank 42 when the fuel pressure between the fuel pump 41 and the fuel supply device 62 is increased to reach a predetermined pressure. In addition, the pressure regulator 65 is disposed between the fuel filter 52 and the fuel supply device 62 and is disposed at a position above the fuel filter 52.

According to this configuration, the pressure regulator 65 is disposed at a position above the fuel filter 52, whereby it is ensured that the fuel supply line 51 in the range from the fuel filter 52 to the pressure regulator 65 extends upward from the fuel filter 52. Consequently, leakage of the fuel from the fuel supply device 62 due to the weight of the fuel collected in the fuel filter 52 can be restrained, even in the case where the vehicle is parked for a long period of time.

As shown in FIGS. 1 and 3 above, the fuel supply line 51 is provided with the pre-pump filter 55 on the upstream side of the fuel pump 41, and the fuel filter 52 is set to be finer in pore size than the pre-pump filter 55.

This configuration ensures that, since the pore size of the fuel filter 52 and the pore size of the pre-pump filter 55 are set different from each other, it is possible, even in the case of using a fuel in which fine dust is contained such as ethanol, to trap coarser dust by the pre-pump filter 55 and to trap by the fuel filter 52 the finer dust having failed to be trapped by the pre-pump filter 55. Accordingly, such a fuel as ethanol can be used.
In addition, since the coarser dust is trapped by the pre-pump filter 55 and therefore coarser dust is not trapped by the fuel filter 52, the possibility of clogging of the fuel filter 52 can be lowered, and the replacement frequency for the fuel filter 52 can be reduced. Further, since the pre-pump filter 55 is coarse in pore size, possibility of clogging of the pre-pump filter 55 can be made low. Therefore, the pre-pump filter 55 is restrained from constituting a resistance against the operation of the fuel pump 41, and, therefore, it is possible to adopt an inexpensive fuel pump 41.

Accordingly, the replacement cycle times for the pre-pump filter 55 and the fuel filter 52 can both be made long, the frequency of maintenance can be lowered, and the flow rate of the fuel passing through the pre-pump filter 55 and the fuel filter 52 can be kept favorable.

As shown in FIGS. 1, 6 and 7 above, a lateral side in the vehicle width direction of the fuel filter 52 is covered with the body cover 48, and the body cover 48 is provided with a maintenance lid 92 via which inspection of the fuel filter 52 is performed.
This configuration ensures that, since the fuel filter 52 is set to be finer in pore size than the pre-pump filter 55 so that a fuel in which fine dust is contained such as ethanol can be used, the replacement cycle time for the fuel filter 52 is shorter than that for the pre-pump filter 55. However, mounting and dismounting of the fuel filter 52 can be performed by only opening the maintenance lid 92, and, therefore, the replacement work is easy to carry out.

As shown in FIGS. 1 to 4 and 6 above, the fuel supply line 51 in the range from the fuel tank 42 to the fuel supply device 62 is substantially U-shaped in plan view.
According to this configuration, the length of the fuel supply line 51 is secured to a certain extent. Therefore, in the case where, for example, a mixed fuel of ethanol and gasoline is used and the mixing ratio is changed due to fuel supply, fuel injection optimal for starting can be performed and the engine 28 can be started favorably, since the fuel before the change in the ethanol-gasoline mixing ratio is filling the fuel supply line 51 ranging from the fuel tank 42 to the fuel supply device 62 and the mixing ratio has already been learned by the ECU. In addition, after the starting of the engine 28, the change in the mixing ratio is re-learned by the ECU on the basis of a signal from an O₂ sensor or the like, so that fuel injection optimal for the ethanol-gasoline mixing ratio after the starting of the engine 28 can be carried out.

Incidentally, application of the present example is not limited to the motor scooter type vehicle 10 on which an engine using gasoline as a fuel is mounted; for instance, the present example may be applied to a motor scooter type vehicle 10 on which an engine 28 using such a bio-fuel as ethanol as a fuel is mounted, insofar as the fuel can be clarified by the fuel filter 52.

### [Industrial Applicability]

The present invention is preferable for an improvement in a motor scooter type vehicle, specifically, for layout of a fuel filter provided in a motor scooter type vehicle.

### [Description of Reference Symbols]

10 ... Motor scooter type vehicle, 11 ... Head pipe, 21 ... Main frame, 22L, 22R ... Seat rail, 25 ... Sub frame, 26 ... Body frame, 28 ... Unit swing type engine, 29 ... Rear frame, 35 ... Storage box, 41 ... Fuel pump, 42 ... Fuel tank, 46 ... Exhaust pipe, 48 ... Body cover, 51 ... Fuel supply line, 52 ... Fuel filter, 53 ... Crankcase, 55 ... Pre-pump filter, 61 ... Vehicle body center line, 62 ... Fuel supply device (injector), 65 ... Pressure regulator, 92 ... Maintenance lid.

## Claims

1. A motor scooter type vehicle (10) comprising a body frame (26) having a main frame (21) extended from a head pipe (11) toward a vehicle lower side and a rear frame (29) extended from a rear portion of the main frame (21) toward a rear upper side of the vehicle, a unit swing type engine (28) supported on the body frame (26) in a vertically swingable manner, a fuel tank (42) supported on the body frame (26) on a front side of the unit swing type engine (28), a fuel supply line (51) through which a fuel in the fuel tank (42) is adapted to be supplied to the unit swing type engine (28), and a fuel filter (52) disposed at an intermediate part of the fuel supply line (51), wherein a cylinder unit (54) is projectingly provided at a crankcase (53) of the unit swing type engine (28)
**characterized in that** the fuel filter (52) is disposed in a space surrounded by the main frame (21) and the rear frame (29) in side view of the vehicle, at a position on a lateral side of the cylinder unit (54).

2. The motor scooter type vehicle (10) according to claim 1,
wherein the fuel supply line (51) is provided with a fuel supply device (62) through which the fuel in the fuel tank (42) is adapted to be supplied to the unit swing type engine (28); and
the fuel tank (42), the fuel filter (52) and the fuel supply device (62) are disposed in this order from a front side of the vehicle toward a vehicle rear side along a vehicle front-rear direction.

3. The motor scooter type vehicle (10) according to claim 2,
wherein a storage box (35) is provided between the fuel tank (42) and the unit swing type engine (28), and
the fuel filter (52) is disposed on a lateral side in a vehicle width direction of the storage box (35).

4. The motor scooter type vehicle (10) according to claim 1, 2 or 3, wherein the fuel filter (52) is disposed on an inner side relative to an outside end in the vehicle width direction of the rear frame (29), and is mounted to the rear frame (29) with its longitudinal direction set along an inclination of the rear frame (29).

5. The motor scooter type vehicle (10) according to any of claims 1 to 4,
wherein an exhaust pipe (46) is extended from the cylinder unit (54) toward the vehicle rear side,
the fuel filter (52) is disposed above the exhaust pipe (46), and
the exhaust pipe (46) and the fuel filter (52) are disposed distributedly to left and right sides of the vehicle, with a vehicle body center line therebetween.

6. The motor scooter type vehicie (10) according to any of claims 2 to 5,
wherein the fuel supply line (51) is provided with a fuel pump (41) through which the fuel in the fuel tank (42) is adapted to be supplied under pressure to the fuel supply device (62), and with a pressure regulator (65) for returning a portion of the fuel to the fuel tank (42) when the fuel pressure between the fuel pump (41) and the fuel supply device (62) is increased to reach a predetermined pressure; and
the pressure regulator (65) is disposed between the fuel filter (52) and the fuel supply device (62) and is disposed at a position above the fuel filter (52).

7. The motor scooter type vehicle (10) according to claim 6,
wherein the fuel supply line (51) is provided with a pre-pump filter (55) on an upstream side of the fuel pump (41), and
the fuel filter (52) is set to be finer in pore size than the pre-pump filter (55).

8. The motor scooter type vehicle (10) according to any of claims 1 to 7, wherein a lateral side in the vehicle width direction of the fuel filter (52) is covered with a body cover (48), and the body cover (48) is provided with a maintenance lid (92) via which inspection of the fuel filter (52) can be performed.

9. The motor scooter type vehicle (10) according to any of claims 2 to 8, wherein the fuel supply line (51) in the range from the fuel tank (42) to the fuel supply device (62) is substantially U-shaped in plan view.

## Patentansprüche

1. Fahrzeug (10) vom Motorrollertyp, umfassend einen Karosserierahmen (26) mit einem Hauptrahmen (21), der sich von einem Kopfrohr (11) zu einer hinteren unteren Fahrzeugseite erstreckt, und einem hinteren Rahmen (29), der sich von einem hinteren Bereich des Hauptrahmens (21) zu einer hinteren oberen Seite des Fahrzeugs erstreckt, eine Brennkraftmaschine (28) vom Einheitsschwenktyp, die an dem Karosserierahmen (26) in einer vertikal schwenkbaren Weise getragen wird, einen Kraftstofftank (42), der an dem Karosserierahmen (26) an einer Vorderseite der Brennkraftmaschine (28) vom Einheitsschwenktyp getragen wird, eine Kraftstoffzufuhrleitung (51), durch welche ein Kraftstoff in dem Kraftstofftank (42) der Brennkraftmaschine (28) vom Einheitsschwenktyp zugeführt werden kann, sowie einem Kraftstofffilter (52), der in einem Zwischenbereich der Kraftstoffzufuhrleitung (51) angeordnet ist, wobei eine Zylindereinheit (54) vorstehend an einem Kurbelgehäuse (53) der Brennkraftmaschine (28) vom Einheitsschwenktyp vorgesehen ist,
**dadurch gekennzeichnet, dass** der Kraftstofffilter (52) in einem Raum angeordnet ist, der von der Seite des Fahrzeugs aus betrachtet durch den Hauptrahmen (21) und den hinteren Rahmen (29) umgeben ist, an einer Position an einer lateralen Seite der Zylindereinheit (54).

2. Fahrzeug (10) vom Motorrollertyp nach Anspruch 1, wobei die Kraftstoffzufuhrleitung (51) mit einer Kraftstoffzufuhrvorrichtung (62) ausgestattet ist, durch welche der Kraftstoff in dem Kraftstofftank (42) der Brennkraftmaschine (28) vom Einheitsschwenktyp zugeführt werden kann; und
der Kraftstofftank (42), der Kraftstofffilter (52) und die Kraftstoffzufuhrvorrichtung (62) in dieser Reihenfolge von einer Vorderseite des Fahrzeugs zu einer Rückseite des Fahrzeugs entlang einer Vorne-hinten-Richtung des Fahrzeugs angeordnet sind.

3. Fahrzeug (10) vom Motorrollertyp nach Anspruch 2, wobei eine Aufbewahrungsbox (35) zwischen dem Kraftstofftank (42) und der Brennkraftmaschine (28) vom Einheitsschwenktyp vorgesehen ist, und
wobei der Kraftstofffilter (52) an einer lateralen Seite der Aufbewahrungsbox (35) in einer Fahrzeugbreitenrichtung angeordnet ist.

4. Fahrzeug (10) vom Motorrollertyp nach Anspruch 1, 2 oder 3, wobei der Kraftstofffilter (52) an einer Innenseite relativ zu einem Außenseitenende des hinteren Rahmens (29) in der Fahrzeugbreitenrichtung angeordnet ist, und an dem hinteren Rahmen (29) mit seiner longitudinalen Richtung entlang einer Neigung des hinteren Rahmens (29) eingestellt montiert ist.

5. Fahrzeug (10) vom Motorrollertyp nach einem der Ansprüche 1 bis 4, wobei ein Auslassrohr (46) von der Zylindereinheit (54) zur Rückseite des Fahrzeugs verläuft,
der Kraftstofffilter (52) über dem Auslassrohr (46) angeordnet ist, und
das Auslassrohr (46) und der Kraftstofffilter (52) verteilt auf die linke und die rechte Seite des Fahrzeugs angeordnet sind, wobei eine Mittellinie der Fahrzeugkarosserie dazwischen liegt.

6. Fahrzeug (10) vom Motorrollertyp nach einem der Ansprüche 2 bis 5,
wobei die Kraftstoffzufuhrleitung (51) mit einer Kraftstoffpumpe (41) versehen ist, durch welche der Kraftstoff in dem Kraftstofftank (42) unter Druck der Kraftstoffzufuhrvorrichtung (62) bereitgestellt werden kann, sowie mit einem Druckregler (65) zum Rückführen eines Teils des Kraftstoffs zu dem Kraftstofftank (42), wenn der Kraftstoffdruck zwischen der Kraftstoffpumpe (41) und der Kraftstoffzufuhrvorrichtung (62) so ansteigt, dass er einen vorbestimmten Druck erreicht; und
wobei der Druckregler (65) zwischen dem Kraftstofffilter (52) und der Kraftstoffzufuhrvorrichtung (62) angeordnet und an einer Position über dem Kraftstofffilter (52) angeordnet ist.

7. Fahrzeug (10) vom Motorrollertyp nach Anspruch 6,
wobei die Kraftstoffzufuhrleitung (51) mit einem Vorpumpenfilter (55) auf einer stromaufwärtigen Seite der Kraftstoffpumpe (41) ausgestattet ist, und
wobei der Kraftstofffilter (52) so eingestellt ist, dass er eine feinere Porengröße als der Vorpumpenfilter (55) aufweist.

8. Fahrzeug (10) vom Motorrollertyp nach einem der Ansprüche 1 bis 7, wobei eine laterale Seite des Kraftstofffilters (52) in der Fahrzeugbreitenrichtung mit einer Karosserieverkleidung (48) verkleidet ist, und wobei die Karosserieverkleidung (48) mit einer Wartungsklappe (92) versehen ist, durch welche eine Inspektion des Kraftstofffilters (52) durchgeführt werden kann.

9. Fahrzeug (10) vom Motorrollertyp nach einem der Ansprüche 2 bis 8, wobei die Kraftstoffzufuhrleitung (51) im Bereich vom Kraftstofftank (42) zur Kraftstoffzufuhrvorrichtung (62) in Draufsicht im Wesentlichen U-förmig ist.

## Revendications

1. Véhicule de type scooter à moteur (10) comprenant un châssis (26) ayant un cadre principal (21) étendu à partir d'un tuyau de refoulement (11) vers un côté inférieur arrière du véhicule et un cadre arrière (29) étendu à partir d'une partie arrière du cadre principal (21) vers un côté supérieur arrière du véhicule, un moteur unitaire de type oscillant (28) supporté sur le châssis (26) d'une manière verticalement oscillante, un réservoir de carburant (42) supporté sur le châssis de corps (26) sur un côté avant du moteur unitaire de type oscillant (28), une conduite d'alimentation en carburant (51) à travers laquelle un carburant dans le réservoir de carburant (42) est adapté pour être amené au moteur unitaire de type oscillant (28) et un filtre à carburant (52) disposé au niveau d'une partie intermédiaire de la conduite d'alimentation en carburant (51), dans lequel une unité de cylindre (54) est prévue en saillie au niveau d'un carter de vilebrequin (53) du moteur unitaire de type oscillant (28),
**caractérisé en ce que** le filtre à carburant (52) est disposé dans un espace entouré par le cadre principal (21) et le cadre arrière (29) sur une vue latérale du véhicule, dans une position sur un côté latéral de l'unité de cylindre (54).

2. Véhicule de type scooter à moteur (10) selon la revendication 1,
dans lequel la conduite d'alimentation en carburant (51) est prévue avec un dispositif d'alimentation en carburant (62) par le biais duquel, le carburant dans le réservoir de carburant (42) est adapté pour être amené au moteur unitaire de type oscillant (28) ; et
le réservoir de carburant (42), le filtre à carburant (52) et le dispositif d'alimentation en carburant (62) sont disposés dans cet ordre à partir d'un côté avant du véhicule vers un côté arrière du véhicule le long d'une direction avant-arrière du véhicule.

3. Véhicule de type scooter à moteur (10) selon la revendication 2,
dans lequel une boîte de stockage (35) est prévue entre le réservoir de carburant (42) et le moteur unitaire de type oscillant (28), et
le filtre à carburant (52) est disposé sur un côté latéral dans le sens de la largeur du véhicule de la boîte de stockage (35).

4. Véhicule de type scooter à moteur (10) selon la revendication 1, 2 ou 3, dans lequel le filtre à carburant (52) est disposé sur un côté interne par rapport à une extrémité extérieure dans le sens de la largeur du véhicule du cadre arrière (29), et est monté sur le cadre arrière (29) avec sa direction longitudinale déterminée le long d'une inclinaison du cadre arrière (29).

5. Véhicule de type scooter à moteur (10) selon l'une quelconque des revendications 1 à 4,
dans lequel un tuyau d'échappement (46) est étendu à partir de l'unité de cylindre (54) vers le côté arrière du véhicule,
le filtre à carburant (52) est disposé au-dessus du tuyau d'échappement (46), et
le tuyau d'échappement (46) et le filtre à carburant (52) sont disposés de manière répartie vers les côtés gauche et droit du véhicule, avec un axe central de corps de véhicule entre eux.

6. Véhicule de type scooter à moteur (10) selon l'une quelconque des revendications 2 à 5,
dans lequel la conduite d'alimentation en carburant (51) est prévue avec une pompe de carburant (41) à travers laquelle le carburant dans le réservoir de carburant (42) est adapté pour être amené sous pression au dispositif d'alimentation en carburant (62), et avec un régulateur de pression (65) pour ramener une partie du carburant vers le réservoir de carburant (42) lorsque la pression de carburant entre la pompe à carburant (41) et le dispositif d'alimentation en carburant (62) est augmentée pour atteindre une pression prédéterminée ; et
le régulateur de pression (65) est disposé entre le filtre à carburant (52) et le dispositif d'alimentation en carburant (62) et est disposé dans une position au-dessus du filtre à carburant (52).

7. Véhicule de type scooter à moteur (10) selon la revendication 6,
dans lequel la conduite d'alimentation en carburant (51) est prévue avec un filtre de pré-pompe (55) sur un côté en amont de la pompe à carburant (41), et
le filtre à carburant (52) est déterminé pour avoir une taille de pore plus fine que le filtre de pré-pompe (55).

8. Véhicule de type scooter à moteur (10) selon l'une quelconque des revendications 1 à 7, dans lequel un côté latéral dans le sens de la largeur du véhicule du filtre à carburant (52) est recouvert avec un couvercle de corps (48), et le couvercle de corps (48) est prévu avec un couvercle d'entretien (92) grâce auquel le contrôle du filtre à carburant (52) peut être réalisé.

9. Véhicule de type scooter à moteur (10) selon l'une quelconque des revendications 2 à 8, dans lequel la conduite d'alimentation en carburant (51) allant du réservoir de carburant (42) jusqu'au dispositif d'alimentation en carburant (62) a sensiblement une forme de U sur une vue en plan.
